(19) Europäisches Patentamt
European Patent Office
Office européen des brevets

(11) **EP 2 163 883 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(51) Int Cl.:
*G01N 15/00* (2006.01)   *G01N 15/02* (2006.01)

(21) Anmeldenummer: **09011049.5**

(22) Anmeldetag: **28.08.2009**

(54) **Partikelgrössenmessgerät**

Particle size measuring device

Appareil de mesure de grandeur de particules

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.09.2008 DE 102008047370**

(43) Veröffentlichungstag der Anmeldung:
**17.03.2010 Patentblatt 2010/11**

(73) Patentinhaber: **Fritsch GmbH**
**55743 Idar-Oberstein (DE)**

(72) Erfinder: **Mutter, Wolfgang**
**66892 Bruchmuehlbach (DE)**

(74) Vertreter: **Mergel, Volker**
**Blumbach - Zinngrebe**
**Patent- und Rechtsanwälte PartG mbB**
**Alexandrastraße 5**
**65187 Wiesbaden (DE)**

(56) Entgegenhaltungen:
**DE-A1- 10 218 413    GB-A- 2 340 936**
**US-A- 4 755 052    US-A- 5 455 675**

**Beschreibung**

Gebiet der Erfindung

Die Erfindung betrifft ein Partikelgrößenmessgerät, bei welchem die Partikelgrößenverteilung anhand des Beugungsmusters bestimmt wird und welches zumindest teilweise mit inverser Fourier-Optik arbeitet.

Hintergrund der Erfindung

Ein Partikelgrößenmessgerät, welches auf dem Prinzip der Lichtbeugung arbeitet, verwendet ein Lichtstrahlenbündel, zumeist von einem Laser geliefert, welches die zu messende Probe durchstrahlt. Strahlabwärts der Probe wird die durch Streuung an dem Partikelensemble erzeugte Intensitätsverteilung mit einem Detektor aufgenommen. Das so erzeugte Streu-/Beugungsmuster kann mit der Mie-Theorie mathematisch beschrieben werden. Die Mie-Theorie behandelt sowohl Streuung unter Vorwärts- als auch unter Rückwärtswinkeln. Ein wichtiger Teil der Mie-Theorie beschreibt die sogenannte Fraunhoferbeugung, welche die Lichtbeugung unter Vorwärtswinkeln betrifft.

Bekannte Partikelgrößenmessgeräte umfassen eine Lichtquelle, typischerweise einen Laser und eine sogenannte Strahlverarbeitungseinheit, welche den dünnen parallelen Laserstrahl zu einem Parallelstrahl mit größerem Durchmesser aufweitet. Bei frühen Partikelgrößenmessgerätten wurde die zu untersuchende Probe in einer Messzelle in diesem aufgeweiteten Parallelstrahl untersucht und das von den Teilchen erzeugte Beugungsspektrum mit einer Fourier-Linse, welche strahlabwärts der Probe angeordnet ist, auf einen Detektor fokussiert. Diese Technik wird gemäß ISO 13320-1:1999(E) als "konventionelle Technik" bezeichnet. Bei der konventionellen Technik, bei der die Teilchen im Parallelstrahl beleuchtet werden, hängt das mit einem bestimmten Detektordurchmesser nachweisbare Partikelgrößenintervall von der Brennweite der Fourier-Linse ab. Will man das Messintervall verändern, müsste man die Brennweite der Fourier-Linse verändern, das heißt eine andere Fourier-Linse verwenden.

In der EP 0 207 176 und der US 4,755,052 derselben Anmelderin ist ein Partikelgrößenmessgerät beschrieben, welches die optischen Verhältnisse gegenüber der konventionellen Technik umkehrt. Dieser Aufbau wird gemäß ISO 13320-1:1999(E) als "Reverse Fourier Set-Up" bezeichnet. Daher wird diesbezüglich im Folgenden von "Inverser Fourier-Optik" gesprochen.

Gegenstand der Druckschrift DE 102 18 413 A1 ist ein Gerät zur Messung der Partikelgrößenverteilung sowie ein Verfahren zur Analyse der Partikelform. In diesem Fall wird ein optimal gaußverteiltes Lichtstrahl-Profil verwendet.

Die GB 2 340 936 A handelt von der Messung von Teilchen-Größenverteilungen unter Einsatz zweier Quellen, die Licht mit unterschiedlichen Wellenlängen emittieren.

Bei der inversen Fourier-Optik befindet sich die Fourier-Linse strahlaufwärts der Messzelle, so dass die Probe im konvergenten Teilchenstrahlbündel beleuchtet wird. Ein Vorteil der inversen Fourier-Optik ist, dass das messbare Partikelgrößenintervall vom Abstand zwischen der Messzelle und dem Detektor abhängt. Daher wird in der EP 0 207 176 vorgeschlagen, die Messzelle auf dem optischen Pfad zu verschieben, wodurch in höchst vorteilhafter Weise unterschiedliche Partikelgrößenintervalle erfasst werden können. Inzwischen werden Partikelgrößenmessgeräte mit inverser Fourier-Optik nicht nur von der Anmelderin erfolgreich gebaut und vermarktet. Wie bereits erwähnt, hat die Technik der inversen Fourier-Optik inzwischen sogar Einzug in den internationalen Standard ISO 13320-1 "Particle Size Analysis - Laser Diffraction methods" Einzug gehalten. Es wird zum Beispiel auf die Version ISO 13320-1:1999(E) verwiesen.

Wenngleich derartige Partikelgrößenmessgeräte bereits vielfältig einsetzbar sind, besitzen sie einen relativ langen optischen Pfad z.B. mit einer Brennweite der Fourier-Linse von 500 mm, wodurch die Geräte relativ groß werden. Es gibt zwar auch kompaktere Partikelgrößenmessgeräte, doch weisen diese zumeist kein variables Messintervall auf oder das Messintervall ist relativ klein.

Insbesondere die Messung von großen Partikelgrößen, welche kleine Beugungswinkel verursachen, sind mit den vorhandenen Geräten nicht oder nur unzureichend möglich.

Ein nach dem Prinzip der EP 0 207 176 gebautes Partikelgrößenmessgerät der Anmelderin arbeitet zum Beispiel mit einer Laserwellenlänge von 632 nm oder 655 nm. Wenn die obere Messgrenze für die Partikelgrößen angehoben werden soll, müsste entweder der Radius des ersten Sensorkanals auf dem Detektor verkleinert oder der Zellabstand vergrößert werden. Fokussierte Laser haben aber je nach Brennweite typischerweise einen $1/e^2$-Durchmesser von 80 $\mu$m bis 250 $\mu$m. Dies stellt typischerweise die physikalische Untergrenze für den inneren Sensorradius dar. Im Übrigen kann die Bohrung für das Loch im Zentrum des Detektors und der Innenradius des innersten Sensorelements nicht beliebig klein gemacht werden.

Eine Vergrößerung des Abstandes der Messzelle zu dem Detektor geht mit einer Vergrößerung der Brennweite des Lichtstrahlenbündels einher. Es ist schwierig eine Brennweite von > 600 mm zu verwenden, da sonst die Spotgröße des Lasers zu groß werden kann. Mit einem solchen Aufbau könnten eventuell Partikelgrößenmessungen bis zu 1500 $\mu$m möglich sein. Bei größeren Brennweiten ist der Systemaufbau aber vermutlich nicht mehr stabil, so dass geringe Vibrationen des Untergrundes dazu führen würden, dass das System seine Justierung verliert. Auf der anderen Seite ist es aber wünschenswert, Teilchengrößen bis 2000 $\mu$m oder noch größer messen zu können.

Ferner wird bei bekannten Partikelgrößenmessgeräten mit Inverser Fourier-Optik und variablen Partikelgrößenmessintervall die Messzelle auf dem optischen Pfad verschoben. Da die Messzelle typischerweise im Durchflussbetrieb gefahren wird, besitzt diese eine Zu- und Ableitung für das dispergierte Probenmaterial, welche demnach ebenfalls mit der Messzelle verschoben werden müssen. Daher besitzen derartige Partikelgrößenmessgeräte entlang des Verschiebungsweges der Messzelle typischerweise einen langen Schlitz im Gehäuse, welcher mit einer Art Bürste gegen Streulicht abgedichtet ist, damit die Leitungen bewegt werden können. Es ist ersichtlich, dass solche Bürsten keine perfekte Streulichtabschirmung bewirken. Ferner können die Bürsten altern, wenn die Leitungen sehr lange an derselben Stelle verbleiben, was zu zusätzlichem Streulichteintrag in das Gerätegehäuse führen kann.

Weiter weist dieser Schlitz eine Breite auf, welche nur etwas größer ist als die Zu- und Ableitungen für das

Probenmaterial, da sonst die Abdichtung gegen Streulicht noch schwieriger wäre. Daher ist das Auswechseln der Messzelle bei solchen Geräten kompliziert. Es muss nämlich das Gerät geöffnet, dass heißt der Gehäusedeckel entfernt werden, und die Leitungen von der Messzelle gelöst werden. Beim Wiedereinbau werden die Schläuche durch den Schlitz mit den Bürsten gefädelt und wieder an der Messzelle angeschlossen, bevor das Gerätegehäuse wieder geschlossen werden kann. Ein Austausch der Messzelle ist somit schwierig. Noch schwieriger gestaltet sich ein Umbau von Nass-Dispergierung auf Trocken-Dispergierung, sofern dies überhaupt möglich ist.

Somit sind die bekannten Partikelgrößenmessgeräte mit variablen Partikelgrößenmessintervall weiter verbesserungswürdig.

Allgemeine Beschreibung der Erfindung

Es ist daher eine Aufgabe der Erfindung, ein Partikelgrößenmessgerät mit variablem Partikelgrößenmessintervall bereit zu stellen, welches eine kompakte Bauform aufweist und einen großen Partikelgrößen-Messbereich, insbesondere hin zu großen Partikelgrößen abdeckt.

Eine weitere Aufgabe der Erfindung ist es, ein Partikelgrößenmessgerät bereit zu stellen, welches gegen Streulicht und Vibrationen unempfindlich ist und präzise Messergebnisse liefert.

Noch eine Aufgabe ist es, ein Partikelgrößenmessgerät bereit zu stellen, welches komfortabel zu bedienen ist und bei welchem die Messzelle schnell und einfach vom Benutzer gewechselt werden kann.

Die Aufgabe der Erfindung wird durch den Gegenstand der unabhängigen Patentansprüche gelöst. Die Unteransprüche betreffen vorteilhafte Weiterbildungen der Erfindung.

Die Erfindung betrifft ein Partikelgrößenmessgerät zur Bestimmung von Partikelgrößenverteilungen mittels Lichtbeugung, insbesondere Laserbeugung. In der Fachwelt werden diese Geräte manchmal als "Laser Particle Sizer" oder "Laserpartikelspektrometer" bezeichnet. Sie beruhen auf dem Prinzip der Beugung des eingestrahlten Lichts an einem Ensemble von kleinen Partikeln.

Das erfindungsgemäße Partikelgrößmessgerät umfasst eine erste Lichtquelle zur Erzeugung eines ersten monochromatischen Lichtstrahlenbündels, vorzugsweise einen ersten Laser. Das erste Lichtstrahlenbündel definiert den optischen Pfad des Partikelgrößenmessgeräts auf welchem die übrigen optischen Bauelemente angeordnet sind. Das Laserstrahlenbündel wird vorzugsweise zunächst aufgeweitet, damit ein Strahlenbündel mit hinreichendem Durchmesser erhalten wird, um die Messzelle auszuleuchten. Diese Strahl-Aufweitungsoptik wird in der Fachwelt als "beam processing unit", also "Strahlbearbeitungseinheit" bezeichnet und ist dem Fachmann bekannt (vgl. ISO 13320-1:1999(E)). Ferner wird das erste Lichtstrahlenbündel auf die Detektoreinrichtung fokussiert. Die Fokussiereinrichtung erzeugt aus der räumlichen Verteilung des gestreuten Lichts in der Messzelle deren Fourier-Transformierte. Daher wird die Fokussiereinrichtung sie in der Fachwelt und im Folgenden als Fourier-Linse bezeichnet (vgl. ISO 13320-1:1999(E)). Mit dem Begriff der "Fourier-Linse" soll selbstverständlich nicht ausgeschlossen sein, dass es sich um eine Mehrzahl von Linsen handeln kann. Das Gerät umfasst demnach eine erste Fourier-Linse zur Fokussierung des ersten Lichtstrahlenbündels. Die erste Fourier-Linse fokussiert das erste Lichtstrahlenbündel auf die Detektoreinrichtung. Im einfachsten Fall liegt die Detektoreinrichtung also in der Brennebene der ersten Fourier-Linse.

Mit dem erfindungsgemäßen Partikelgrößenmessgerät wird zumindest teilweise (nicht notwendiger Weise ausschließlich) im konvergenten Strahlenbündel gemessen. In der Literatur wird häufig vereinfacht von einer Messung "im konvergenten Strahl" gesprochen. Bei der Messung im konvergenten Strahlenbündel wird das Lichtstrahlenbündel vor der Messzelle fokussiert, so dass die Messzelle bzw. das Partikelensemble bei der Beleuchtung zur Erzeugung des Beugungsmusters in einem konvergenten Lichtstrahlenbündel liegt. Wie in der Einleitung bereits beschrieben, wird diese Technik gemäß ISO 13320-1:1999(E) als "reverse Fourier optics" und daher im Folgenden als "inverse Fourier-Optik" bezeichnet. Die inverse Fourier-Optik ist dem Fachmann auf diesem Gebiet grundsätzlich bekannt.

Ferner ist eine Messzelle umfasst, welche einen beidseits mit für das Untersuchungslicht transparenten Fenstern begrenzten Probenraum zur Aufnahme des Probenmaterials umfasst, so dass das Probenmaterial, dessen Partikelgrößenverteilung gemessen werden soll, von dem Lichtstrahlenbündel durchleuchtet wird, wenn das Lichtstrahlenbündel durch das erste Fenster in den Probenraum eintritt und mit dem erzeugten Beugungsmuster durch das zweite Fenster wieder austritt. Das Probenmaterial stellt ein Partikelensemble, welches vorzugsweise in einem Fluid dispergiert ist, dar. Wenn das Probenmaterial in einer Flüssigkeit dispergiert ist, spricht man von einer Nass-Dispergierung und wenn das Probenmaterial in einem Gas, z.B. Luft dispergiert (fein verteilt) ist, spricht man von einer Trocken-Dispergierung. Beides erfordert gewisse Dispergierungs- und Zuführungstechniken, welche dem Fachmann grundsätzlich bekannt sind. Vorzugsweise wird sowohl bei der Nass-Dispergierung als auch bei der Trocken-Dispergierung im Durchflussbetrieb durch die Messzelle gemessen. Die Messzelle kann auch mehrere Licht-Austrittsflächen z.B. mit Prismen enthalten, wenn dies gewünscht wird. Derartige Messzellen mit Haupt- und Nebenaustrittsflächen sind z.B. in der DE 102 18 415 beschrieben, die diesbezüglich durch Referenz inkorporiert wird.

Wenn das Probenmaterial, also das dispergierte Partikelensemble in dem Messraum der Messzelle mit dem Untersuchungslicht bestrahlt wird, entsteht das Beugungsmuster, welches die physikalische Information über die Partikelgrößenverteilung enthält. Es wird das Probenmaterial durch die beiden Fenster hindurch mit dem ersten Lichtstrahlenbündel im Durchlichtbetrieb durch die Messzelle beleuchtet, um ein erstes Beugungsmuster des Probenmaterials zu erzeugen, wenn die Messzelle im Strahlengang des ersten Lichtstrahlenbündels bzw. auf dem optischen Pfad angeordnet ist. Das erste Lichtstrahlenbündel der ersten Lichtquelle dient also bei einer ersten Messung als das Untersuchungslicht zur Erzeugung eines ersten Beugungsmusters.

Das Partikelgrößenmessgerät umfasst ferner eine Detektoreinrichtung auf dem optischen Pfad mit welcher das von dem Probenmaterial erzeugte Beugungsmuster unter Winkeln in Vorwärtsrichtung detektiert wird. Die Detektoreinrichtung ist demnach die ortsauflösende Hauptdetektoreinrichtung, die zum Nachweis der FraunhoferBeugung unter null Grad auf dem optischen Pfad angeordnet ist und besitzt ggf. eine Bohrung durch welche der Nullstrahl hindurchtreten kann. Die Hauptdetektoreinrichtung misst demnach das Beugungsmuster unter Winkeln in Vorwärtsrichtung, zentriert um die optische Achse beim Auftreffen auf die Detektoreinrichtung. Der Winkelbereich kann von sehr kleinen Winkeln bis zu einigen zehn Grad reichen, je nachdem wie groß die Detektoreinrichtung ist und wie der Abstand der Messzelle von der Detektoreinrichtung eingestellt ist. Die Detektoreinrichtung besitzt typischerweise eine Vielzahl von Sensorelementen, welche in einem speziellen Muster angeordnet sind. Die Multisensor-Detektoreinrichtung besteht z.B. aus einzelnen, radialsymmetrischen und konzentrischen Sensorelementen. Derartige Multisensor-Detektoreinrichtungen sind dem Fachmann z.B. aus der DE 102 18 415 bekannt, welche diesbezüglich durch Referenz inkorporiert wird.

Das Partikelgrößenmessgerät umfasst ferner eine Auswerteeinrichtung, die die Partikelgrößenverteilung des Probenmaterials anhand der Intensitätsverteilung des Beugungsmusters berechnet. Die jeweilige Partikelgröße lässt sich wie folgt berechnen:

Die Beugung an einem kreisförmigen Objekt mit dem Radius $r_i$ unter Verwendung monochromatischen Lichtes liefert ein Bild, das ein zentrales, helles, kreisförmiges Maximum, den Nullstrahl umfasst, welcher abwechselnd von dunklen und hellen Ringen, den Beugungsminima und Beugungsmaxima umgeben ist. Um die Partikelgrößenverteilung zu berechnen, wird das Beugungsmuster möglichst über mehrere Maxima und Minima erfasst. Wenn der Radius der mittleren Partikelgrößen der verschiedenen Partikelgrößenklassen mit $r_i$ bezeichnet wird, dann werden die Messungen unter den Winkeln $\theta_i$ vorgenommen, unter denen die Partikel mit Radius $r_i$ beim Abstand f der Messzelle von der Detektoreinrichtung das erste Beugungsmaximum erzeugen. Es gilt:

$$r_i = \frac{1{,}84 \cdot \lambda}{2 \cdot \pi \cdot \sin\theta_i}$$

mit

$$\theta_i = \left( \arctan\left( \frac{Sensorradius}{f} \right) \right),$$

wobei $\lambda$ die Wellenlänge des Untersuchungslichts ist.

Somit lässt sich mit dem Partikelgrößenmessgerät ein Partikelgrößen-Messintervall abdecken, welches von dem Durchmesser der Detektoreinrichtung und - bei Messung im konvergenten Strahlenbündel - dem Abstand f der Messzelle von der Detektoreinrichtung abhängt. Um unterschiedliche Partikelgrößen-Messintervalle abdecken zu können, wird daher der Abstand f der Messzelle entlang dem optischen Pfad, das heißt die Länge f der Teilstrecke des optischen Pfades zwischen der Messzelle und der Detektoreinrichtung mittels einer Relativbewegung zwischen dem optischem Pfad und der Messzelle verändert. Demzufolge wird die Messzelle auf dem optischen Pfad an zumindest einer ersten und zweiten Messzellenposition angeordnet, wobei die erste und zweite Messzellenposition in unterschiedlichem Abstand f entlang des optischen Pfades zur Detektoreinrichtung liegen.

Erfindungsgemäß wird nun die Ausbreitungsrichtung des ersten Lichtstrahlenbündels mittels einer Reflektoreinrichtung umgelenkt, so dass der optische Pfad des Geräts abgewinkelt ist. Man kann daher auch von einem gefalteten optischen Pfad sprechen. Der Abstand der Messzelle entlang dem optischen Pfad wird hierin als effektiver Messzellen-Abstand bezeichnet. Die erste Messzellenposition liegt auf dem optischen Pfad strahlaufwärts, d.h. im Strahlengang vor der Reflektoreinrichtung und die zweite Messzellenposition auf dem optischen Pfad strahlabwärts, d.h. im Strahlengang hinter der Reflektoreinrichtung, so dass entlang dem optischen Pfad ein möglichst großer Unterschied im Abstand zu der Detektoreinrichtung erzielt wird, um die beiden erzielbaren Messintervalle möglichst weit auseinander zu ziehen. Vorzugsweise liegt die erste Messzellenposition in geringem Abstand strahlabwärts der ersten Lichtquelle und die zweite Messzellenposition in geringem Abstand strahlaufwärts der Detektoreinrichtung, um die Länge des optischen Pfades möglichst vollständig auszuschöpfen. Beispielsweise beträgt eine gut realisierbare Brennweite des ersten Lichtstrahlenbündels etwa 500 mm, so dass die Länge der effektiven Teilstrecke des optischen Pfades zwischen der Messzelle in der ersten Messzellenposition und der Detektoreinrichtung etwa 480 mm betragen kann. Vorzugsweise sollte der optische Pfad bzw. die Brennweite des ersten Lichtstrahlenbündels kürzer als 1 m sein, um eine hinreichende Stabilität der optischen Anordnung gegen Vibrationen zu gewährleisten. Andererseits sollte der Abstand der ersten Messzellenposition von der Detektoreinrichtung, d.h der effektive Messzellen-Abstand in der ersten Messzellenposition vorzugsweise mindestens 200 mm betragen, um hinreichend große Partikelgrößen messen zu können.

Erfindungsgemäß erfolgt die Relativbewegung zwischen dem optischem Pfad und der Messzelle, um die Messzelle von der ersten in die zweite Messzellenposition oder umgekehrt zu bringen, quer zum optischen Pfad an der ersten und zweiten Messzellenposition. Die Relativbewegung zwischen dem optischen Pfad und der Messzelle kann grundsätzlich entweder durch eine Bewegung der Messzelle bei feststehendem optischen Pfad, eine Bewegung des optischen Pfades bei feststehender Messzelle oder einer Relativbewegung beider Teile gegeneinander erfolgen. Bei der vorliegenden Erfindung ist es jedoch besonders bevorzugt, den optischen Pfad bei feststehender Messzelle zu bewegen.

Durch die Kombination eines gefalteten optischen Pfades und der relativen Querbewegung werden mehrere Vorteile erzielt. Erstens kann ein relativ langer optischer Pfad erzielt werden, so dass kleine Beugungswinkel gemessen werden können. Dadurch reicht der Messbereich bis hin zu großen Partikelgrößen. Zweitens kann trotz des langen optischen Pfades eine kompakte Bauform erreicht werden.

In der relativen Bewegung in Querrichtung liegt jedoch noch ein weiterer Vorteil begründet. Hierdurch kann nämlich ein Partikelgrößenmessgerät mit variablem Messintervall geschaffen werden, welches lediglich einen kleinen Weg für die Relativbewegung zwischen der ersten und zweiten Messzellenposition benötigt, obwohl die erste und zweite Messzellenposition entlang des optischen Pfades erheblich weiter auseinander liegen. Z.B. kann bei einem Abstand der ersten Messzellenposition von der Detektoreinrichtung entlang des optischen Pfades von 480 mm mit einem tatsächlichen Quer-Bewegungshub zwischen der ersten und zweiten Messzellenposition von etwa 100 mm ausgekommen werden. Hierdurch können Leitungslängen minimiert und die gesamte Mechanik erheblich vereinfacht werden.

Demnach weist der optische Pfad zumindest einen ersten Teilabschnitt strahlaufwärts der Reflektoreinrichtung und einen zweiten Teilabschnitt strahlabwärts der Reflektoreinrichtung auf, wobei sich die erste Messzellenposition auf dem ersten Teilabschnitt und die zweite Messzellenposition auf dem zweiten Teilabschnitt befindet. Die Ausbreitungsrichtung des ersten Lichtstrahlenbündels auf dem ersten und zweiten Teilabschnitt ist dabei im Wesentlichen entgegengesetzt. D.h. dass die Messzelle in der ersten und zweiten Messzellenposition in umgekehrter Richtung durchleuchtet wird.

Bei einer bevorzugten geometrischen Anordnung ist der optische Pfad im Wesentlichen U-förmig abgewinkelt oder gefaltet. Hierzu umfasst die Reflektoreinrichtung einen ersten und zweiten Spiegel, welche den optischen Pfad jeweils um 90° ablenken, so dass der optische Pfad in den ersten Teilabschnitt zwischen der ersten Lichtquelle und dem ersten Spiegel, den zweiten Teilabschnitt zwischen dem zweiten Spiegel und der Detektoreinrichtung und einen dritten Teilabschnitt zwischen dem ersten und zweiten Spiegel unterteilt ist. Die Ausbreitungsrichtung des ersten Lichtstrahlenbündels auf dem ersten und zweiten Teilabschnitt verläuft also im Wesentlichen entgegengesetzt und auf dem dritten Teilabschnitt quer zu dem ersten und zweiten Teilabschnitt.

Vorzugsweise liegt die zweite Messzellenposition in geringem Abstand, z.B. < 50 mm, bevorzugt im Abstand von 20 mm ± 10 mm, vor der Detektoreinrichtung, um mit der Messzelle in der zweiten Messzellenposition und mit der gegebenen Detektoreinrichtung möglichst große Beugungswinkel und damit kleine Partikelgrößen erfassen zu können. Es ist ersichtlich, dass es darauf ankommt, die zweite Messzellenposition möglichst dicht an der Detektoreinrichtung zu positionieren, wenn möglichst große Beugungswinkel erfasst werden sollen. Daher wird zumindest in der zweiten Messzellenposition mit inverser Fourier-Optik, also im konvergenten Lichtstrahlenbündel gemessen, da hierbei auf Linsen zwischen der Messzelle und der Detektoreinrichtung verzichtet werden kann. Es ist allerdings bevorzugt, in beiden Messzellenposition mit inverser Fourier-Optik, also im konvergenten Lichtstrahlenbündel zu messen.

Vorzugsweise sind die erste Lichtquelle, die Reflektoreinrichtung und die Detektoreinrichtung auf einer optischen Bank aufgebaut. Gemäß einer besonders bevorzugten Ausführungsform der Erfindung wird nun anders als bei dem in der EP 0 207 176 beschriebenen Gerät jedoch nicht die Messzelle auf dem optischen Pfad verschoben, sondern es wird der optische Pfad, also die optische Bank mit den optischen Bauteilen (außer der Messzelle) quer zur optischen Achse der Messzelle, d. h. quer zur Ausbreitungsrichtung des Lichts an der ersten und zweiten Messzellenposition verschoben und die Messzelle steht fest.

In vorteilhafter Weise ist dadurch die Abdichtung des Geräts gegen Streulicht erheblich vereinfacht, da sich die Zuleitung und Ableitung zu der Messzelle nicht relativ zum Gehäuse verschieben müssen. Dadurch kann z.B. auf mit Bürsten zur Streulichtabschirmung versehene Schlitze verzichtet werden, da die Messzelle in Bezug auf das Gehäuse feststeht. Ferner kann z.B. mit einem Schlitten mit Linearführung zur Verschiebung der optischen Bank eine hohe Präzision der Führung erzielt werden.

In weiter vorteilhafter Ausgestaltung umfasst das Gerät eine Messzellenhalterung zur Aufnahme der Messzelle in dem Gerätegehäuse, welche ortsfest zu dem Gerätegehäuse befestigt ist. Das Gerätegehäuse besitzt ferner eine Öffnung, durch welche die Messzelle vom Benutzer in die Messzellenhalterung einsetzbar und aus der Messzellenhalterung entnehmbar ist. Die Messzellenhalterung weist z.B. eine Linearführung auf, in die die Messzelle quer zum optischen Pfad eingeschoben werden kann. In höchst vorteilhafter Weise kann somit die Messzelle durch die Öffnung, z.B. ein Schlitz in der Oberseite des Gerätegehäuses, vom Benutzer in die Messzellenhalterung eingesetzt werden, ohne das Gerätegehäuse öffnen zu müssen.

Die Messzelle wird typischerweise im Durchflussbetrieb mit in Fluid dispergiertem Probenmaterial betrieben, d.h. nass oder trocken dispergiert. Daher besitzt die Messzelle eine Zu- und eine Ableitung für das Fluid-dispergierte Probenmaterial. Wenn die Zu- und die Ableitung unmittelbar an der Messzelle befestigt sind, z. B. an einem oberen Deckel, der die Öffnung in dem Gerätegehäuse verschließt, wenn die Messzelle in die Messzellenhalterung eingesetzt ist, kann die Messzelle in vorteilhafter Weise zusammen mit der Zu- und Ableitung, in die Messzellenhalterung eingesetzt und aus dieser entnommen werden, ohne das Gerätegehäuse öffnen zu müssen. Das Gerät kann ggf. sogar vom Benutzer von Nass- auf Trocken-Dispergierung und umgekehrt umgerüstet werden, ohne das Gehäuse öffnen zu müssen.

Gemäß einer besonders bevorzugten Ausführungsform der Erfindung ist eine zweite Lichtquelle zur Erzeugung eines zweiten monochromatischen Lichtstrahlenbündels umfasst, um mittels des zweiten Lichtstrahlenbündels ein weiteres Beugungsmuster des Probenmaterials zu erzeugen, wenn sich die Messzelle in der zweiten Messzellenposition strahlabwärts der Reflektoreinrichtung unmittelbar vor der Detektoreinrichtung befindet. Die Wellenlänge des zweiten Lichtstrahlenbündels ist kürzer als die Wellenlänge des ersten Lichtstrahlenbündels, vorzugsweise um mindestens 33% kürzer, um mit dem zweiten Lichtstrahlenbündel möglichst kleine Partikelgrößen messen zu können. Vorzugsweise ist das erste Lichtstrahlenbündel infrarot und das zweite Lichtstrahlenbündel grün oder blau, so dass sogar ein Wellenlängenunterschied von etwa einem Faktor 2 erzielt wird. Es kann also mit unterschiedlichen Wellenlängen an unterschiedlichen Messzellenpositionen gemessen werden, was einen besonders großen Messbereich bei gleichzeitig kompakter Bauweise ermöglicht.

Vorzugsweise umfasst die Reflektoreinrichtung zumindest einen teildurchlässigen Spiegel, welcher das erste Lichstrahlenbündel reflektiert und für das zweite Lichtstrahlenbündel transparent ist, um das zweite Lichtstrahlenbündel durch die Rückseite des teildurchlässigen Spiegels in den optischen Pfad einzukoppeln. Solche Wellenlängen-selektiven Spiegel werden auch als dichroitisch bezeichnet. Dadurch ist die Strecke des zweiten Lichtstrahlenbündels auf dem optischen Pfad bis zur Detektoreinrichtung wesentlich kürzer als, z.B. maximal halb so lang wie die Strecke des ersten Lichtstrahlenbündels.

Weiter vorzugsweise treffen das erste und zweite Lichtstrahlenbündel mit unterschiedlichen Polarisationswinkeln von unterschiedlichen Seiten auf den dichroitischen Spiegel. Die Reflektanz für das erste Lichtstrahlenbündel ist besonders hoch, wenn dieses in Bezug auf die Einfallsebene auf den teildurchlässigen Spiegel s-polarisiert ist und die Transmittanz für das zweite Lichtstrahlenbündel ist besonders hoch wenn dieses in Bezug auf die Einfallsebene auf den teildurchlässigen Spiegel p-polarisiert ist.

Ferner umfasst das Gerät eine zweite Fourier-Linse zur Fokussierung des zweiten Lichtstrahlenbündels und die Detektoreinrichtung liegt in der Brennebene der zweiten Fourier-Linse. Um mit dem ersten Lichtrahlenbündel im konvergenten Strahl, also mit inverser Fourier-Optik zu messen, wenn sich die Messzelle in der zweiten Messzellenposition befindet, ist die zweite Fourier-Linse strahlaufwärts der zweiten Messzellenposition angeordnet. Somit kann mit dem fokussierten zweiten Lichtstrahlenbündel im konvergenten Strahlenbündel, d. h. mit inverser Fourier-Optik gemessen werden, wenn sich die Messzelle in der zweiten Messzellenposition befindet. Es ist zweckmäßig, die zweite Fourier-Linse vor dem teildurchlässigen Spiegel anzuordnen, um das zweite Lichtstrahlenbündel bereits konvergent in den optischen Pfad einzukoppeln. Insbesondere wird das zweite Lichtstrahlenbündel ausschließlich strahlaufwärts der zweiten Messzellenposition auf die Detektoreinrichtung fokussiert, so dass zwischen der Messzelle und der Detektoreinrichtung keine weitere Linse vorhanden ist, wenn sich die Messzelle in der zweiten Messzellenposition befindet. Hierdurch kann der Abstand zwischen Messzelle und Detektoreinrichtung minimiert werden und damit möglichst große Streuwinkel mit der Detektoreinrichtung erfasst werden. In einfacher Weise ist die zweite Fourier-Linse direkt an der zweiten Lichtquelle angeordnet, sie kann gegebenenfalls in der Lichtquelle integriert, z.B. unmittelbar an einem Halbleiterlaser angeordnet sein.

Wenn auch mit dem ersten Lichtstrahlenbündel in der ersten Messzellenposition im konvergenten Strahlenbündel also mit inverser Fourier-Optik gemessen werden soll, ist die erste Fourier-Linse nicht nur strahlaufwärts der Reflektoreinrichtung, sondern strahlaufwärts der ersten Messzellenposition angeordnet. Es ist ebenfalls zweckmäßig die erste Fourier-Linse direkt an der ersten Lichtquelle anzuordnen. Die erste Fourier-Linse kann ggf. in die erste Lichtquelle integriert, z.B. unmittelbar an einem Halbleiterlaser angeordent sein. Es ist jedoch grundsätzlich denkbar, mit dem ersten Lichtstrahlenbündel und der Messzelle in der ersten Messzellenposition konventionell (vgl. ISO 13320-1:1999(E)), d.h. im parallelen Strahlenbündel, und mit dem zweiten Lichtstrahlenbündel und der Messzelle in der zweiten Messzellenposition mit inverser Fourier-Optik zu messen. Der Vorzug der vorliegenden Erfindung wird anhand des folgenden Beispiels besonders deutlich. Es wird eine erste Messung mit dem ersten langwelligen Lichtstrahlenbündel (z.B. infrarot: $\lambda_1$ = 1064 nm) in der ersten Messzellenposition, welche entlang des optischen Pfades relativ weit von der Detektoreinrichtung entfernt ist (z.B. Abstand: $f_1$ = 480 mm), und eine zweite Messung mit dem zweiten kurzwelligen Lichtstrahlenbündel (z.B. grün: $\lambda_2$ = 532 nm) in der zweiten Messzellenposition, welche entlang des optischen Pfades relativ dicht vor der Detektoreinrichtung angeordnet ist (z.B. Abstand $f_2$ = 20 mm) durchgeführt. Gemäß der Formel:

$$d = \frac{1{,}84 \cdot \lambda \cdot f \cdot 2000}{2 \cdot \pi \cdot R}$$

mit

    d: Partikeldurchmesser
    $\lambda$: Wellenlänge
    f: Abstand der Messzelle zur Detektoreinrichtung
    R: Sensorradius

ergibt sich für eine typische Detektoreinrichtung für die zweite Messung ein Messbereich für den Partikeldurchmesser von 0,1 $\mu$m bis 42 $\mu$m und für die erste Messung ein Messbereich für den Partikeldurchmesser von 4,8 $\mu$m bis 2000 pm. D.h. die Obergrenze für den Partikeldurchmesser beträgt 2000 $\mu$m. Somit kann mit einem Gerät mit einer Länge des optischen Pfades von wenig mehr als 480 mm, der auch noch gefaltet ist, ein Gesamt-Messbereich von 0,1 $\mu$m bis 2000 $\mu$m vollständig abgedeckt werden.

Das Gerät kann also äußerst kompakt gebaut werden und deckt dennoch einen großen Messbereich ab. Würde man denselben Messbereich mit einer einzigen Wellenlänge von 532 nm auf einem geradlinigen Pfad erreichen wollen, müsste dieser etwa 950 mm lang sein.

Ein alternatives Ausführungsbeispiel verwendet einen infraroten ersten Laser mit $\lambda_1$ = 940 nm und einer Brennweite von 560 mm und einem effektiven Messzellenabstand in der ersten Messzellenposition von $f_1$ = 540 mm. Der zweite Laser kann auch hierbei ein grüner Laser mit einer Wellenlänge von $\lambda_2$ = 532 nm sein. Allgemein ist es zweckmäßig die erste Lichtquelle im nahen InfrarotBereich (IR-A), bzw. mit einer Wellenlänge $\lambda_1$ größer als 780 nm, vorzugsweise größer als 850 nm und/oder die zweite Lichtquelle mit einer Wellenlänge $\lambda_2$

von kleiner als 600 nm, vorzugsweise im grünen oder blauen Bereich, bzw. kleiner als 570 nm zu wählen.

Es sollte noch erwähnt werden, dass der große Messbereich bereits mit der Multisensor-Detektoreinrichtung in Vorwärtsrichtung, d.h. mit einer einzigen Detektoreinrichtung und ohne weitere separate Detektoren, die unter großen Winkeln, ggf. Rückstreuwinkeln messen, erzielt werden kann. Selbstverständlich soll die Verwendung von derartigen weiteren Detektoren nicht ausgeschlossen sein, da hiermit der Messbereich hin zu kleinen Partikeldurchmessern zusätzlich erweitert werden kann. Falls gewünscht, können demnach unter größeren Winkeln, z.B. unter 90° oder sogar Rückstreuwinkeln zusätzliche Detektoren angeordnet sein, wie dies dem Fachmann grundsätzlich bekannt ist.

Für die Messung wird also wie folgt vorgegangen. Zunächst wird das Fluid-dispergierte Probenmaterial in die Messzelle eingeleitet. Bei einer ersten Messung wird das Probenmaterial mit dem ersten langwelligen Lichtstrahlenbündel beleuchtet, wenn sich die Messzelle in der ersten Messzellenposition strahlaufwärts der Reflektoreinrichtung befindet, also mit möglichst großem Abstand zwischen der Messzelle und der Detektoreinrichtung entlang dem optischen Pfad. Hiermit wird ein erstes Partikelgrößenintervall aufgenommen und ausgewertet.

Bei einer zweiten Messung wird das Probenmaterial mit dem zweiten kurzwelligen Lichtstrahlenbündel beleuchtet, wenn sich die Messzelle in der zweiten Messzellenposition strahlabwärts der Reflektoreinrichtung unmittelbar vor der Detektoreinrichtung befindet. Hiermit wird ein zweites Partikelgrößenintervall aufgenommen und ausgewertet. Das zweite Partikelgrößenintervall ist gegenüber dem ersten Partikelgrößenintervall zu kleineren Partikelgrößen hin verschoben, wobei die beiden Intervalle vorzugsweise überlappen. Zwischen den beiden Messungen wird die Relativbewegung zwischen der Messzelle und dem optischen Pfad durchgeführt, um die Messzelle von der ersten Messzellenposition in die zweite Messzellenposition oder umgekehrt zu bringen, je nachdem welche Messung zuerst durchgeführt wird.

Mit dem ersten Lichtstrahlenbündel wird also zumindest mit der Messzelle in der ersten Messzellenposition gemessen. Es kann jedoch mit dem ersten Lichtstrahlenbündel auch in der zweiten Messzellenposition gemessen werden, wenn dies erwünscht ist. Dies liefert ein Zwischen-Messintervall.

Es ist ferner ersichtlich, dass die Erfindung mehrere Aspekte besitzt, welche zwar in Kombination eine besonders vorteilhafte Wirkung entfalten, aber teilweise auch unabhängig voneinander realisiert werden können.

So kann z.B. das Aufbauen der ersten Lichtquelle und der Detektoreinrichtung auf einer optischen Bank und das Bewirken der Relativbewegung zwischen dem optischem Pfad und der Messzelle mittels einer Verschiebung der optischen Bank bei feststehender Messzelle bereits per se Vorteile bieten. Wird nämlich eine ortsfeste Messzellenhalterung zur Aufnahme der Messzelle in das Gerätegehäuse eingebaut und das Gerätegehäuse umfasst eine entsprechende Öffnung, kann die Messzelle vom Benutzer in die Messzellenhalterung eingesetzt und aus der Messzellenhalterung entnommen werden, ohne dass das Gerätegehäuse geöffnet muss. Im Vergleich dazu ist ein Messzellenwechsel bei einem Partikelgrößenmessgerät mit verschiebbarer Messzelle erheblich komplizierter, wenn überhaupt möglich.

Ferner werden erfindungsgemäß zwei Lichtstrahlenbündel mit unterschiedlichen Wellenlängen verwendet. Diese werden mittels eines dichroitischen Spiegels auf dieselbe optische Achse gekoppelt. Der Spiegel steht hierzu unter 45° zu dem ersten und zweiten Lichtstrahlenbündel. Es wird das erste Lichtstrahlenbündel mit s-Polarisation unter einem Winkel von 45° auf die Vorderseite des Spiegels gerichtet, so dass dieses unter 90° reflektiert wird. Das zweite Lichtstrahlenbündel wird mit p-Polarisation von hinten unter 45° auf den Spiegel gerichtet, so dass das zweite Lichtstrahlenbündel geradlinig in den optischen Pfad eingekoppelt wird und strahlabwärts des Spiegels beide Strahlenbündel auf derselben optischen Achse liegen. Der teildurchlässige Spiegel besitzt bei der ersten Wellenlänge und s-Polarisation eine hohe Reflektanz und bei der zweiten Wellenlänge und p-Polarisation eine hohe Transmittanz. Somit können beide Lichtstrahlenbündel nacheinander mit geringem Verlust unter demselben Winkel auf die Messzelle gerichtet werden.

Im Folgenden wird die Erfindung anhand von Ausführungsbeispielen und unter Bezugnahme auf die Figuren näher erläutert.

Kurzbeschreibung der Figuren

Es zeigen:

Fig. 1	eine schematische Darstellung des optischen Pfades des Partikelgrössenmessgeräts in der ersten Messzellenposition,

Fig. 2	wie Fig. 1, aber in der zweiten Messzellenposition,

Fig. 3	eine dreidimensionale Darstellung des Partikelgrößenmessgeräts in der ersten Messzellenposition mit angedeutetem ersten Lichtstrahlenbündel,

Fig. 4	wie Fig. 3, aber in der zweiten Messzellenposition mit angedeutetem zweiten Lichtstrahlenbündel,

Fig. 5	eine Draufsicht von oben auf das Partikelgrößenmessgerät aus Fig. 3 in der ersten Messzellenposition,

Fig. 6	wie Fig. 5, aber in der zweiten Messzellenposition,

Fig. 7	eine dreidimensionale Darstellung des Partikelgrößenmessgeräts aus Fig. 3 mit entnommener Messzelle,

Fig. 8	eine dreidimensionale Darstellung des Partikelgrößenmessgeräts aus Fig. 3 mit geschlossenem Gehäusedeckel,

Fig. 9	eine Darstellung der Transmissionskurve des ersten Spiegels bei S-Polararisation und

Fig. 10	eine Darstellung der Transmissionskurve des zweiten Spiegels bei S-Polarisation und P-Polarisation.

Detaillierte Beschreibung der Erfindung

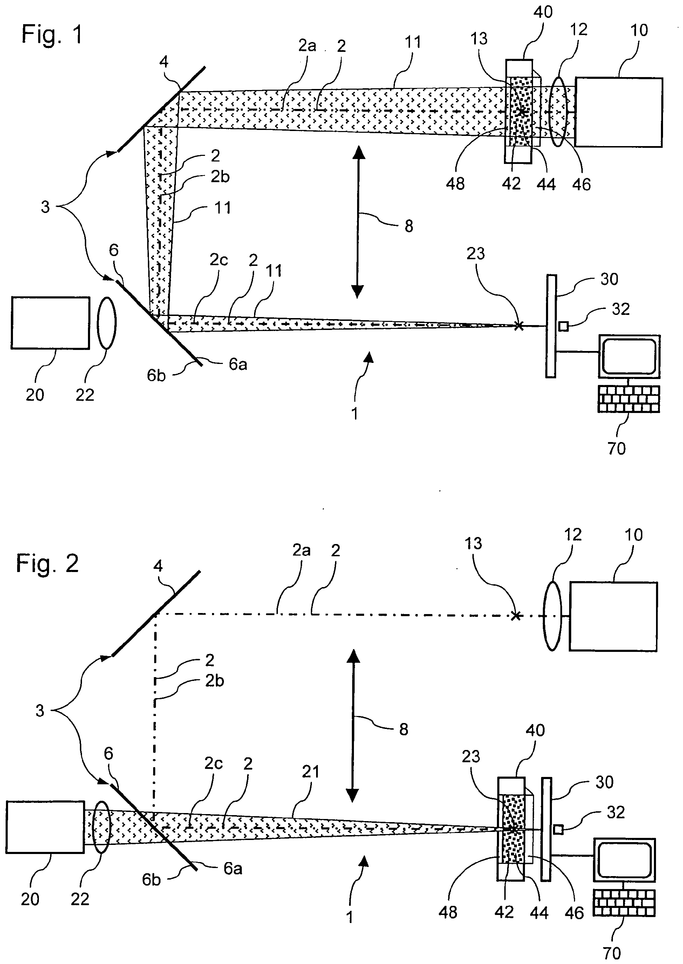

Bezugnehmend auf Fig. 1 ist das Partikelgrößenmessgerät 1 mit seinem optischen Pfad 2 dargestellt, welcher von der ersten Lichtquelle 10 bis zur Detektoreinrichtung 30 verläuft. Der optische Pfad 2 ist mittels eines ersten und zweiten Spiegels 4, 6 im Wesentlich U-förmig gefaltet, so dass der optische Pfad 2 in drei Teilpfade 2a, 2b und 2c unterteilt ist. Die Lichtquelle 10 umfasst einen Infrarotlaser mit 1064 nm Wellenlänge und eine Strahlbearbeitungseinheit zur Aufweitung des Laserstrahls. Der Laser und die Strahlbearbeitungseinheit sind nicht separat dargestellt, sondern die Lichtquelle 10 emittiert bereits ein aufgeweitetes erstes Lichtstrahlenbündel 11. Das Lichtstrahlenbündel 11 wird von der ersten Fourier-Linse 12 auf den Detektor 30 fokussiert. Der Detektor 30 liegt also in diesem Ausführungsbeispiel in der Brennebene der ersten Fourier-Linse 12. Die Messzelle 40 liegt strahlabwärts der ersten Fourier-Linse 12 auf dem optischen Pfad 2, genauer auf der ersten Teilstrecke 2a in der ersten Messzellenposition 13. Das konvergente erste Lichtstrahlenbündel 11 durchleuchtet den Probenraum 42 der Messzelle 40 mit dem darin befindlichen dipergierten Probenmaterial 44. Der Probenraum 42 ist beidseits von Fenstern 46, 48 begrenzt.

Das konvergente erste Lichtstrahlenbündel 11 wird von den beiden jeweils unter 45° zum Strahlengang angeordneten Spiegeln 4, 6 reflektiert, und das Beugungsmuster wird von der Detektoreinrichtung 30 aufgelöst. Das erste Lichtstrahlenbündel 11 ist in Bezug auf die Einfallsebenen auf die beiden Spiegel 4, 6 senkrecht polarisiert (s-polarisiert), um eine möglichst hohe Reflektanz zu erreichen.

Mit der Messzelle 40 in der ersten Messzellenposition 13 wird mit dem ersten Lichtstrahlenbündel 11 ein erstes Beugungsmuster mit der Detektoreinrichtung 30 aufgenommen. Die Brennweite der ersten Fourier-Linse 12 beträgt etwa 500 mm und der Abstand der Messzelle 40 in der ersten Messzellenposition 13 von der Detektoreinrichtung 30 beträgt auf dem optischen Pfad 2, das heißt entlang der drei Teilpfade 2a, 2b, und 2c etwa 480 mm (effektiver Messzellen-Abstand). Hiermit kann mit einer üblichen Detektoreinrichtung 30, wie sie zum Beispiel in der DE 102 18 415 beschrieben ist, ein Partikelgrößenmessintervall von etwa 5 $\mu$m bis etwa 2000 $\mu$m abgedeckt werden. Aufgrund der relativ langen Wellenlänge des Infrarotlasers kann trotz der Obergrenze von 2000 $\mu$m der effektive Messzellen-Abstand mit 480 mm relativ klein gehalten werden.

Die beiden Spiegel 4, 6 bilden zusammen die Reflektoreinrichtung 3. Der zweite Spiegel 6 ist als dichroitischer Spielgel ausgebildet, welcher das s-polarisierte Infrarotlicht mit hoher Reflektanz von der Vorderseite 6a reflektiert.

Die zweite Lichtquelle 20 weist wie die erste Lichtquelle 10 einen nicht separat dargestellten Laser und eine Strahlbearbeitungseinheit zur Aufweitung des Laserstrahls auf. Die Lichtquelle 20 emittiert demnach ein aufgeweitetes Lichtstrahlenbündel 21, welches von der zweiten Fourier-Linse 22 auf die Detektoreinrichtung 30 fokussiert wird. Das konvergente zweite Lichtstrahlenbündel 21 wird über die Rückseite 6b des teildurchlässigen Spiegels 6 in den optischen Pfad 2, genauer die Teilstrecke 2c, eingekoppelt, um auf die Detektoreinrichtung 30 gerichtet zu werden. Die Detektoreinrichtung 30 liegt demnach auch in der Brennebene der zweiten Fourier-Linse 22. Das zweite Lichtstrahlenbündel 21 ist in Bezug auf die Einfallsebene auf den zweiten Spiegel 6 parallel polarisiert (p-polarisiert), da der Spiegel 6 für p-polarisiertes grünes Licht eine hohe Transmittanz aufweist.

Fig. 2 zeigt das Partikelgrößenmessgerät 1 mit der Messzelle 40 in der zweiten Messzellenposition 23.

Zwischen der ersten und zweiten Messzellenposition 13, 23 wird eine relative Querverschiebung zwischen der Messzelle 40 und dem optischen Pfad 2 durchgeführt. Der Hub der Querverschiebung, das heißt die direkte Entfernung zwischen der ersten und zweiten Messzellenposition 13, 23 beträgt nur etwa 100 mm, wohingegen der Abstand der ersten und zweiten Messzellenposition entlang des optischen Pfades 2 etwas 480 mm beträgt. Die Querverschiebung ist durch den Pfeil 8 angedeutet.

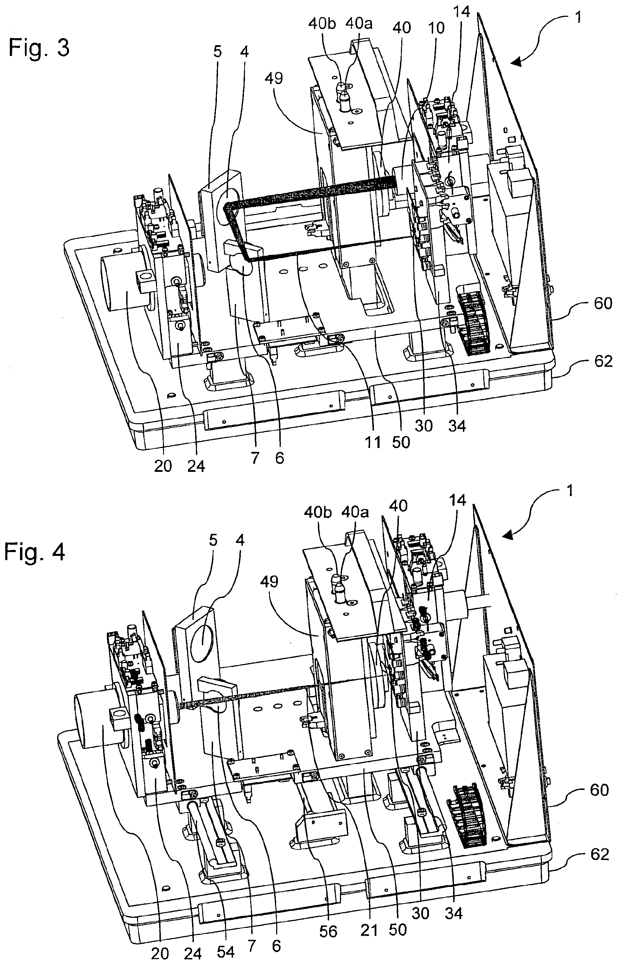

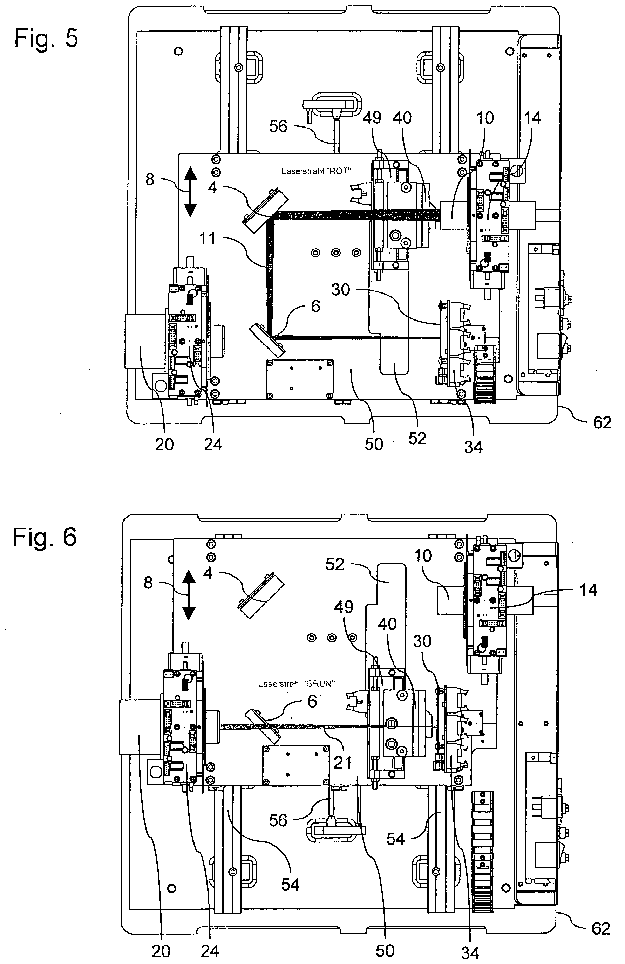

Der mechanische Aufbau auf der optischen Bank 50 ist am Besten in den Figuren 3 bis 6 zu erkennen. Die erste und zweite Lichtquelle 10, 20 ist mit jeweiligen Halterungseinrichtungen 14, 24 auf der optischen Bank 50 befestigt. Ferner sind die Spiegel 4, 6 jeweils mit einem Ständer 5, 7 auf der optischen Bank befestigt. Am Ende des optischen Pfades 2 ist die Detektoreinrichtung 30 mit einer Halteeinrichtung 34 auf der optischen Bank befestigt. Somit sind alle optischen Elemente, außer der Messzelle 30 auf der optischen Bank 50 befestigt und justiert.

Die Messzelle 40 ist von oben in einer Messzellenhalterung 49 eingesteckt, so dass der Probenraum 42 auf dem optischen Pfad 2 liegt. Die Messzellenhalterung 49 ist durch eine längliche Ausnehmung 52 in der optischen Bank mit dem Boden 62 des Gerätegehäuses 60 verbunden. Um die Messzelle 40 von der ersten Messzellenposition 13 (Fig. 3) in die zweite Messzellenposition 23 (Fig. 4) zu bringen, wird die optische Bank 50 quer zu der Messzelle 40 verschoben. Hierzu besitzt die optische Bank eine lineare Verschiebeeinrichtung 54 und eine Antriebseinrichtung 56, im vorliegenden Beispiel in Form eines Spindelantriebs unter der optischen Bank 50. Der Antrieb 56 bewirkt demnach die Querverschiebung der optischen Bank 50 auf der linearen Verschiebeeinrichtung 54, um die Messzelle von der ersten in die zweite Messzellenposition 13, 23 und umgekehrt zu bringen.

In vorteilhafter Weise steht die Messzelle 40 in der Messzellenhalterung 49 in Bezug auf das Gerätegehäuse 60 fest, wenn die optische Bank 50 quer verschoben wird, um die Messzelle von der ersten in die zweite Messzellenposition 13, 23 oder umgekehrt zu bringen. Daher bleiben auch die Zu- und Ableitungen 40a, 40b, von denen in Fig. 3 und 4 lediglich die Anschlussstutzen dargestellt sind, ortsfest in Bezug auf das Gerätegehäuse 60. Lediglich die elektrischen Kabel (nicht dargestellt) zu den beiden Lichtquellen 10, 20 und zur Detektoreinrichtung 30 müssen eine gewisse Beweglichkeit aufweisen, um die Verschiebung der optischen Bank 50 zu ermöglichen. Aufgrund des geringen Bewegungshubes ist dies jedoch unproblematisch. Ferner ist es erheblich einfacher die im Gerätegehäuse verlaufenden elektrischen Kabel zu bewegen, als die Fluidschläuche der Zu- und Ableitung 40a, 40b.

Es ist ersichtlich, dass in der ersten Messzellenposition 13 lediglich mit dem langwelligen Lichtstrahlenbündel 11 gemessen wird. In der zweiten Messzellenposition 23 wird vornehmlich mit dem zweiten kurzwelligen Lichtstrahlenbündel 21 gemessen. Es kann jedoch in der zweiten Messzellenposition 23 auch mit dem langwelligen ersten Lichtstrahlenbündel 11 gemessen werden, falls dies erwünscht ist.

In der ersten Messzellenpositon 13 befindet sich die Messzelle unmittelbar vor der ersten Lichtquelle 10 und der ersten Fourier-Linse 12, welche in Fig. 3 nicht separat dargestellt ist, sondern in das Gehäuse der ersten Lichtquelle 10 integriert ist. In der zweiten Messzellenposition 23 befindet sich die Messzelle unmittelbar vor der Detektoreinrichtung 30. Die zweite Fourier-Linse 22 ist in Fig. 4 ebenfalls nicht separat dargestellt und ist in das Gehäuse der zweiten Lichtquelle 20 integriert.

Demnach wird in der ersten Messzellenposition mit großer Wellenlänge und relativ großem Abstand zwischen Messzelle 40 und Detektoreinrichtung 30 gemessen, um möglichst große Partikelgrößen erfassen zu können und in der zweiten Messzellenposition mit der kurzwelligen zweiten Lichtquelle 20 mit möglichst geringem Abstand zwischen der Messzelle 40 und der Detektoreinrichtung 30, um möglichst kleine Partikelgrößen erfassen zu können. Hierdurch wird ein großes Gesamt-Partikelgrößenmessintervall abgebildet. Der effektive Messzellen-Abstand beträgt in der ersten Messzellenposition etwa 480 mm und in der zweiten Messzellenposition etwa 20 mm. Vorzugsweise sollte der effektive Messzellenabstand in der ersten Messzellenposition 13 nicht kleiner sein als 200 mm und nicht größer sein als 1000 mm. Der effektive Messzellenabstand in der zweiten Messzellenposition sollte nicht größer sein als 50 mm und sollte so klein wie möglich sein, das heißt so klein wie es die Geometrie der Messzelle 40 erlaubt.

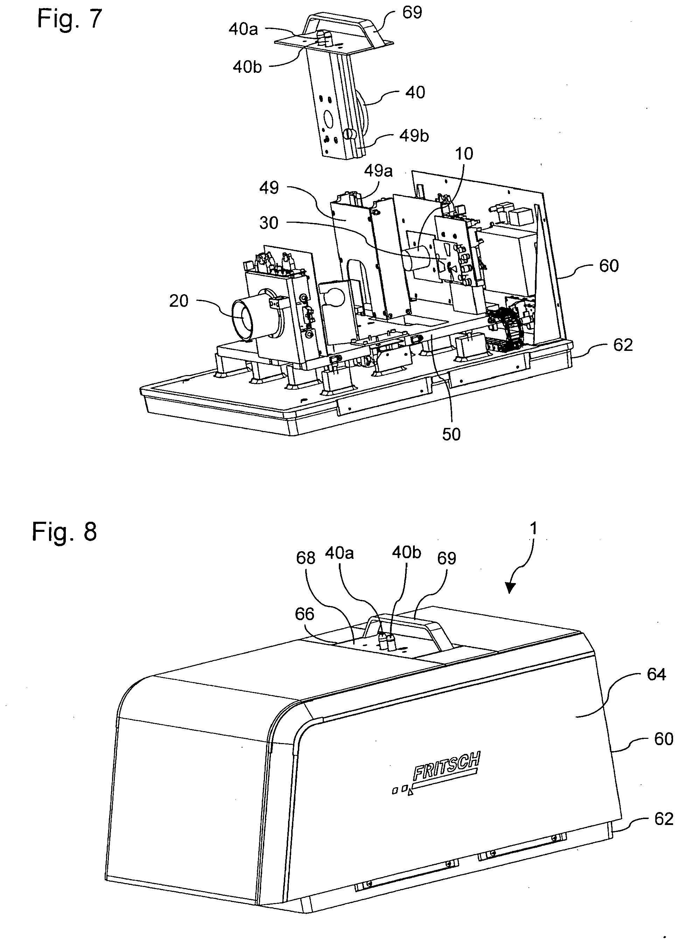

Bezugnehmend auf Fig. 7 ist die Messzelle 40 aus der Messzellenhalterung 49 entnommen. Die Messzellenhalterung 49 und Messzelle 40 umfassen hierzu zueinander komplementäre Führungsmittel 49a, 49b. Hiermit kann die Messzelle 40 jederzeit und in beiden Messzellenpositionen 13, 23 problemlos nach oben entfernt werden.

Bezugnehmend auf Fig. 8 besitzt das Gerätegehäuse 60, einen Gehäusedeckel 64, welcher an seiner Oberseite eine rechteckige Öffnung 66 aufweist, welche mit einer Deckplatte 68 der Messzelle 40 abgedeckt ist, wenn die Messzelle 40 in der Messzellenhalterung 49 eingesetzt ist. Ferner weist die Messzelle 40 einen Griff 69 auf. Der Benutzer kann somit einfach die Messzelle 40 an dem Handgriff 69 fassen und aus der Messzellenhalterung 49 nach oben herausziehen, ohne das Gerätegehäuse 60 oder den Gehäusedeckel 64 öffnen zu müssen. Es ist sogar möglich, die in diesem Beispiel für Nass-Dispergierung ausgelegte Messzelle 40 durch eine andere Messzelle für Trocken-Dispergierung zu ersetzen, ohne das Gerätegehäuse 60 öffnen zu müssen. Vorteilhafterweise wird hierdurch eine gute und dauerhafte Streulichtabschirmung des Gehäuseinneren bewirkt, da in dem Gehäusedeckel 64 keine Schläuche relativ zu dem Gehäusedeckel 64 bewegt werden müssen.

Zusammenfassend umfasst die Messzelle 40 eine Zuleitung 40a und eine Ableitung 40b für das dispergierte Probenmaterial, um das Probenmaterial im Durchflussbetrieb durch die Messzelle 40 untersuchen zu können, und die Messzelle 40 kann zusammen mit der Zuleitung 40a und der Ableitung 40b vom Benutzer in die Messzellenhalterung 49 eingesetzt und aus dieser entnommen werden, ohne das Gerätegehäuse 60 öffnen zu müssen.

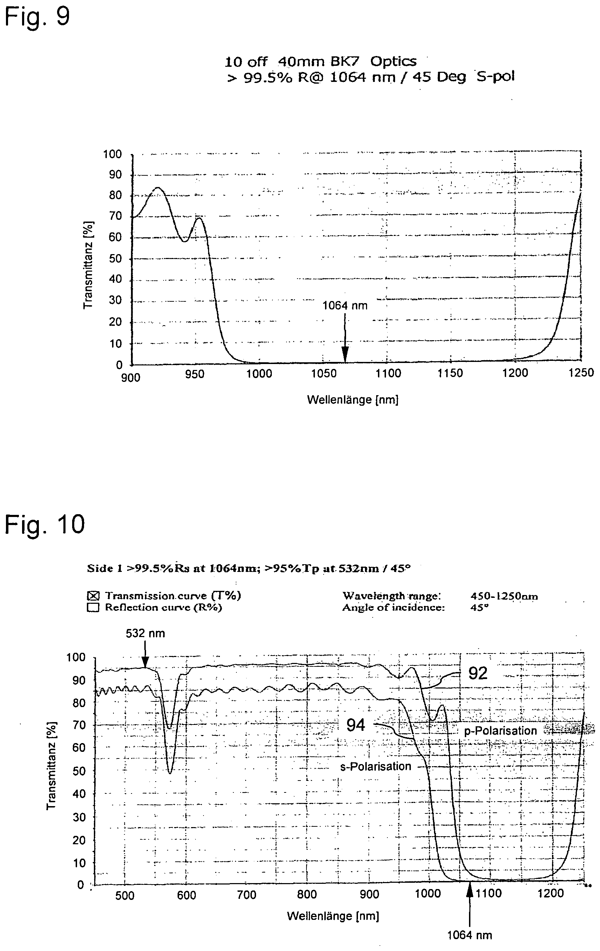

Fig. 9 zeigt die Transmissionskurve des ersten Spiegels 4 für s-polarisiertes Licht von 900 - 1250 nm. Es ist zu sehen, dass die Transmission bei 1064 nm (erste Lichtquelle 10) bei der nahe Null liegt. Die Reflektanz an dieser Stelle beträgt mehr als 99,5%.

Bezugnehmend auf Fig. 10 sind die beiden Transmissionskurven des zweiten Spiegels 6 für p-polarisiertes Licht 92 und s-polarisierts Licht 94 für Wellenlängen von 450 bis 1250 nm dargestellt. Das p-polarisierte erste Lichtstrahlenbündel 11 besitzt bei 1064 nm eine Transmission nahe null (Kurve 94) und eine Reflektanz von > 99,5%. Das p-polarisierte zweite Lichtstrahlenbündel (grün) besitzt bei 532 nm eine Transmitanz von etwa 95% (Kurve 92). Entsprechende beidseits beschichtete dichroitische Spiegel 6 sind kommerziell erhältlich. Dichroitische Spiegel beruhen auf der Interferenz der Lichtwellen, die von einer Abfolge mehrerer dünner dielektrischer Schichten auf der Oberfläche reflektiert werden. Dichroitische Spiegel sind also eine spezielle Form der Interferenzfilter und unterscheiden sich daher von Farbfiltern, die auf der Absorbtion des Lichts in bestimmten Wellenlängenbereichen beruhen.

Die erzeugten Beugungsmuster werden mittels einer Auswerteeinrichtung 70, in Form eines Computers ausgewertet. Der Computer 70 berechnet hieraus mittels einer Inversionsrechnung die jeweilige Partikelgrößenverteilung. Der Computer steuert ebenfalls den Antrieb für die optische Bank 50.

Das gezeigte Ausführungsbeispiel benutzt also zwei Laser, nämlich einen infraroten Laser 10, um mit der großen Wellenlänge möglichst große Partikel messen zu können, und einen grünen Laser 20, um mit der kleinen Wellenlänge möglichst kleine Partikel jeweils mit Vorwärtsstreuung messen zu können. Die Messzelle 40 wird nacheinander mit den beiden Lasern 10, 20 bestrahlt und der gesamte Aufbau auf der optischen Bank 50 wird relativ zur Messzelle 40 verfahren. Das erste infrarote Lichtstrahlenbündel 11 ist zweimal abgewinkelt, um einen möglichst großen effektiven Messzellen-Abstand in der ersten Messzellenposition 13 zu schaffen.

Die Detektoreinrichtung 30 hat im Zentrum eine nicht dargestellte Bohrung mit einem Durchmesser von etwa 150 $\mu$m bis 180 $\mu$m durch das das ungebeugte Lichtstrahlenbündel (Nullstrahl) hindurchtreten kann. Mit der Fotodiode 32 kann die Extinktion der zu messenden Probe bestimmt werden. Dies wird zum Beispiel zur Einstellung der Probenkonzentration benutzt. Übliche Strahlabsorptionen liegen zwischen 7% und 25%.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne die Erfindung zu verlassen. Ferner ist ersichtlich, dass die Merkmale unabhängig davon, ob sie in der Beschreibung, den Ansprüchen, den Figuren oder anderweitig offenbart sind auch einzeln wesentliche Bestandteile der Erfindung definieren, selbst wenn sie zusammen mit anderen Merkmalen gemeinsam beschrieben sind.

**Patentansprüche**

1. Gerät (1) zur Messung der Partikelgrößenverteilung von Probenmaterial (44) mittels Lichtbeugung, umfassend:

   eine erste Lichtquelle (10) zur Erzeugung eines ersten monochromatischen Lichtstrahlenbündels (11), wobei das erste Lichtstrahlenbündel (11) einen optischen Pfad (2) des Geräts definiert,
   eine erste Fourier-Linse (12) für das erste Lichtstrahlenbündel (11),
   eine Messzelle (40) mit einem beidseits von Fenstern (46, 48) begrenzten Probenraum (42) zur Aufnahme des Probenmaterials (44), wobei das Probenmaterial (44) in dem Probenraum (42) mit dem ersten Lichtstrahlenbündel (11) bestrahlt werden kann, um ein Beugungsmuster des Probenmaterials (44) zu erzeugen, wenn die Messzelle (40) im Strahlengang des ersten Lichtstrahlenbündels (11) angeordnet ist,
   eine Detektoreinrichtung (30) auf dem optischen Pfad (2) zum Nachweisen des von dem Probenmaterial (44) erzeugten Beugungsmusters unter Winkeln in Vorwärtsrichtung,
eine Auswerteeinrichtung (70) zum Bestimmen der Partikelgrößenverteilung des Probenmaterials (44) anhand des Beugungsmusters,
wobei die Länge der Teilstrecke des optischen Pfades (2) zwischen der Messzelle (40) und der Detektoreinrichtung (30) mittels einer Relativbewegung (8) zwischen dem optischem Pfad (2) und der Messzelle (40) veränderbar ist, so dass die Messzelle (40) auf dem optischen Pfad (2) an zumindest einer ersten und zweiten Messzellenposition (13, 23) angeordnet werden kann, um unterschiedliche Partikelgrößenintervalle abdecken zu können,

**dadurch gekennzeichnet, dass**

die Ausbreitungsrichtung des ersten Lichtstrahlenbündels (11) mittels einer Reflektoreinrichtung (3) umgelenkt wird, so dass der optische Pfad (2) abgewinkelt ist,
wobei die erste Messzellenposition (13) auf dem optischen Pfad (2) strahlaufwärts der Reflektoreinrichtung (3) und die zweite Messzellenposition (23) auf dem optischen Pfad (2) strahlabwärts der Reflektoreinrichtung (3) liegt, und
wobei die Relativbewegung (8) zwischen dem optischem Pfad (2) und der Messzelle (40) quer zum optischen Pfad (2) an der ersten und zweiten Messzellenposition (13, 23) erfolgt.

2. Gerät (1) nach Anspruch 1,
wobei die zweite Messzellenposition (23) in geringem Abstand vor der Detektoreinrichtung (40) liegt, um große Beugungswinkel erfassen zu können.

3. Gerät (1) nach einem der vorstehenden Ansprüche,
wobei der optische Pfad (2) zumindest einen ersten Teilabschnitt (2a) strahlaufwärts der Reflektoreinrichtung (3) und einen zweiten Teilabschnitt (2c) strahlabwärts der Reflektoreinrichtung (3) umfasst,
wobei sich die erste Messzellenposition (13) auf dem ersten Teilabschnitt (2a) und die zweite Messzellenposition (23) auf dem zweiten Teilabschnitt (2c) befindet und die Ausbreitungsrichtung des ersten Lichtstrahlenbündels (11) auf dem ersten und zweiten Teilabschnitt (2a,2c) im Wesentlichen entgegengesetzt ist.

4. Gerät (1) nach einem der vorstehenden Ansprüche,
wobei die Reflektoreinrichtung (3) einen ersten und zweiten Spiegel (4, 6) umfasst, so dass der optische Pfad im Wesentlichen U-förmig gefaltet ist und

einen ersten Teilabschnitt (2a) zwischen der ersten Lichtquelle (10) und dem ersten Spiegel (4),
einen zweiten Teilabschnitt (2c) zwischen dem zweiten Spiegel (6) und der Detektoreinrichtung (30) und
einen dritten Teilabschnitt (2b) zwischen dem ersten und zweiten Spiegel (4, 6) umfasst,
wobei die Ausbreitungsrichtung des ersten Lichtstrahlenbündels (11) auf dem ersten und zweiten Teilabschnitt (2a, 2c) im Wesentlichen entgegengesetzt und auf dem dritten Teilabschnitt (2b) quer zu dem ersten und zweiten Teilabschnitt (2a, 2c) verläuft und
wobei sich die erste Messzellenposition (13) auf dem ersten Teilabschnitt (2a) und die zweite Messzellenposition (23) auf dem zweiten Teilabschnitt (2c) befindet.

5. Gerät (1) nach einem der vorstehenden Ansprüche,
wobei die erste Lichtquelle (10), die erste Fourier-Linse (12), die Reflektoreinrichtung (3) und die Detektoreinrichtung (30) auf einer optischen Bank (50) aufgebaut sind und die Relativbewegung zwischen dem optischem Pfad (2) und der Messzelle (40) mittels einer Querverschiebung (5) der optischen Bank (50) bei feststehender Messzelle (40) erfolgt.

6. Gerät (1) nach einem der vorstehenden Ansprüche, umfassend
ein Gerätegehäuse (60) und eine Messzellenhalterung (49) zur Aufnahme der Messzelle (40), wobei die Messzellenhalterung (49) ortsfest in dem Gerätegehäuse (60) befestigt ist und das Gerätegehäuse (60) eine Öffnung (66) aufweist, durch welche die Messzelle (40) vom Benutzer von außen in die Messzellenhalterung (49) einsetzbar und aus der Messzellenhalterung (49) entnehmbar ist, ohne das Gerätegehäuse (60) öffnen zu müssen.

7. Gerät (1) nach einem der vorstehenden Ansprüche,
wobei die erste Fourier-Linse (12) strahlaufwärts der ersten Messzellenposition (13) angeordnet ist, um mit dem konvergenten ersten Lichtstrahlenbündel (11) und der Messzelle (40) in der ersten und/oder zweiten Messzellenposition (13, 23) mit inverser Fourier-Optik zu messen.

8. Gerät (1) nach einem der vorstehenden Ansprüche, umfassend

eine zweite Lichtquelle (20) zur Erzeugung eines zweiten monochromatischen Lichtstrahlenbündels (11), insbesondere mit einer Wellenlänge, die kürzer ist als die Wellenlänge des ersten Lichtstrahlenbündels (11), und
eine zweite Fourier-Linse (22), um mit dem zweiten Lichtstrahlenbündel (11) ein weiteres Beugungsmuster des Probenmaterials zu erzeugen, wenn sich die Messzelle (40) in der zweiten Messzellenposition (23) strahlabwärts der Reflektoreinrichtung (3) befindet.

9. Gerät (1) nach Anspruch 8,
wobei die Reflektoreinrichtung (3) zumindest einen teildurchlässigen Spiegel umfasst, welcher das erste Lichtstrahlenbündel (11) reflektiert und für das zweite Lichtstrahlenbündel (21) durchlässig ist, um das zweite Lichtstrahlenbündel (21) durch die Rückseite (6b) des teildurchlässigen Spiegels (6) in den optischen Pfad einzukoppeln.

10. Gerät (1) nach Anspruch 9,
wobei das erste und zweite Lichtstrahlenbündel (11, 21) von unterschiedlichen Seiten (6a, 6b) mit unterschiedlichen Polarisationswinkeln (s, p) auf den teildurchlässigen Spiegel (6) treffen.

11. Gerät (1) nach einem der Ansprüche 8 bis 10,
wobei die zweite Fourier-Linse (22) für das zweite Lichtstrahlenbündel (21) strahlaufwärts der zweiten Messzellenposition (23) angeordnet ist, um mit dem konvergenten zweiten Lichtstrahlenbündel (21) mit inverser Fourier-Optik zu messen, wenn sich die Messzelle (40) in der zweiten Messzellenposition (23) befindet.

12. Gerät (1) nach Anspruch 11,
wobei die Detektoreinrichtung (30) in der Brennebene der zweiten Fourier-Linse (12) angeordnet ist und zwischen der Messzelle (40) und der Detektoreinrichtung (30) keine weitere Linse vorhanden ist, wenn sich die Messzelle (40) in der zweiten Messzellenposition (23) befindet.

13. Verfahren zur Bestimmung der Partikelgrößenverteilung von Probenmaterial (44)
**dadurch gekennzeichnet, dass** es mit dem Gerät (1) nach einem der vorstehenden Ansprüche durchgeführt wird und die folgenden Schritte umfasst:

a) Einleiten des dispergierten Probenmaterials (44) in die Messzelle (40),
b) Beleuchten des Probenmaterials (44) mit dem ersten Lichtstrahlenbündel (11), wenn sich die Messzelle (40) in der ersten Messzellenposition (13) strahlaufwärts der Reflektoreinrichtung (3) befindet, Aufnehmen und Auswerten der Intensitätsverteilung des Beugungsmusters zur Berechnung der Partikelgrößenverteilung in einem ersten Partikelgrößenintervall,
c) Beleuchten des Probenmaterials (44) mit dem ersten oder zweiten Lichtstrahlenbündel (11,21), wenn sich die Messzelle (40) in der zweiten Messzellenposition (23) strahlabwärts der Reflektoreinrichtung (3) befindet, Aufnehmen und Auswerten der Intensitätsverteilung des Beugungsmusters zur Berechnung der Partikelgrößenverteilung in einem zweiten Partikelgrößenintervall, wobei das zweite Partikelgrößenintervall gegenüber dem ersten Partikelgrößenintervall zu kleineren Partikelgrößen hin verschoben ist,
d) zwischen Schritt b) und c) Ansteuern der Relativbewegung (8) zwischen der Messzelle (40) und dem optischen Pfad, um die Messzelle (40) von der ersten Messzellenposition (13) in die zweite Messzellenposition (23) oder umgekehrt zu bringen, je nachdem ob zuerst Schritt b) oder c) durchgeführt wird.

14. Gerät (1) zur Messung der Partikelgrößenverteilung von Probenmaterial (44) mittels Lichtbeugung, umfassend:

eine erste Lichtquelle (10) zur Erzeugung eines ersten monochromatischen Lichtstrahlenbündels (11), wobei das erste Lichtstrahlenbündel (11) einen optischen Pfad (2) des Geräts (1) definiert,
eine erste Fourier-Linse (12) für das erste Lichtstrahlenbündel (11),
eine Messzelle (40) mit einem beidseits von Fenstern (46, 48) begrenzten Probenraum (42) zur Aufnahme des Probenmaterials (44), wobei das Probenmaterial (44) in dem Probenraum (42) mit dem ersten Lichtstrahlenbündel (11) bestrahlt werden kann, um ein Beugungsmuster des Probenmaterials (44) zu erzeugen, wenn die Messzelle (40) im Strahlengang des ersten Lichtstrahlenbündels (11) angeordnet ist,
eine Detektoreinrichtung (30) auf dem optischen Pfad zum Messen des von dem Probematerial (44) erzeugten Beugungsmusters unter Winkeln in Vorwärtsrichtung,
eine Auswerteeinrichtung (70) zum Bestimmen der Partikelgrößenverteilung des Probenmaterials (44) anhand des Beugungsmusters,
wobei die Länge der Teilstrecke des optischen Pfades zwischen der Messzelle (40) und der Detektoreinrichtung (30) mittels einer Relativbewegung (8) zwischen dem optischem Pfad (2) und der Messezelle (40) veränderbar ist, so dass die Messzelle (40) auf dem optischen Pfad (2) an zumindest einer ersten und zweiten Messzellenposition (13, 23) angeordnet werden kann, um unterschiedliche Partikelgrößenintervalle abdecken zu können,
wobei die erste Lichtquelle (10), die erste Fourier-Linse (12) und die Detektoreinrichtung (30) auf einer optischen Bank (50) aufgebaut sind,

**dadurch gekennzeichnet, dass**

die Relativbewegung (8) zwischen dem optischem Pfad (2) und der Messezelle (40) mittels einer Verschiebung der optischen Bank (50) bei feststehender Messezelle (40) erfolgt,

eine Messzellenhalterung (49) zur Aufnahme der Messzelle (40) umfasst ist, wobei diese Messzellenhalterung (49) ortsfest an dem Gerätegehäuse (60) befestigt ist und

das Gerätegehäuse (60) eine Öffnung (66) umfasst, durch welche die Messezelle (40) vom Benutzer in die Messzellenhalterung (49) einsetzbar und aus der Messzellenhalterung (49) entnehmbar ist, ohne das Gerätegehäuse (60) öffnen zu müssen.

**Claims**

1. A device (1) for measuring the particle size distribution of sample material (44) using light diffraction, comprising:

    a first light source (10) for generating a first monochromatic light beam (11), the first light beam (11) defining an optical path (2) of the device;
    a first Fourier lens (12) for the first light beam (11);
    a measuring cell (40) having a sample chamber (42) that is bounded on both sides thereof by windows (46, 48), for accommodating the sample material (44), wherein the sample material (44) in the sample chamber (42) can be irradiated with the first light beam (11) in order to produce a diffraction pattern of the sample material (44) when the measuring cell (40) is arranged in the beam path of the first light beam (11);
    a detector means (30) in the optical path (2) for detecting the diffraction pattern produced by the sample material (44) at angles in the forward direction;
    an evaluation means (70) for determining the particle size distribution of the sample material (44) on the basis of said diffraction pattern;
    wherein the length of the section of the optical path (2) between the measuring cell (40) and the detector means (30) can be altered by a relative displacement (8) between the optical path (2) and the measuring cell (40) such that the measuring cell (40) can be arranged in the optical path (2) at least at first and second measuring cell positions (13, 23) in order to be able to accommodate different particle size ranges;

    **characterized in that**

    the propagation direction of the first light beam (11) is deflected by a reflector means (3) so that the optical path (2) is angled;
    wherein the first measuring cell position (13) is located in the optical path (2) upstream of the reflector means (3) and the second measuring cell position (23) is located in the optical path (2) downstream of the reflector means (3); and
    wherein the relative displacement (8) between the optical path (2) and the measuring cell (40) is effected transversely to the optical path (2) at the first and second measuring cell positions (13, 23).

2. The device (1) according to claim 1, wherein the second measuring cell position (23) is shortly in front of the detector means (40) in order to be able to cover large diffraction angles.

3. The device (1) according to any one of the preceding claims, wherein the optical path (2) comprises at least a first section (2a) upstream of the reflector means (3) and a second section (2c) downstream of the reflector means (3), wherein the first measuring cell position (13) is in the first section (2a) and the second measuring cell position (23) is in the second section (2c), and wherein the propagation direction of the first light beam (11) along the first and second sections (2a, 2c) is substantially opposite to each other.

4. The device (1) according to any one of the preceding claims, wherein the reflector means (3) comprises a first mirror and a second mirror (4, 6) so that the optical path is angled substantially like a U-shape and comprises

    a first section (2a) between the first light source (10) and the first mirror (4);
    a second section (2c) between the second mirror (6) and the detector means (30); and
    a third section (2b) between the first and second mirrors (4, 6);
    wherein the propagation direction of the first light beam (11) along the first and second sections (2a, 2c) is substantially opposite to each other and is perpendicular to the first and second sections (2a, 2c) along the third section (2b); and
    wherein the first measuring cell position (13) is located in the first section (2a) and the second measuring cell position (23) is located in the second section (2c).

5. The device (1) according to any one of the preceding claims, wherein the first light source (10), the first Fourier lens (12), the reflector means (3) and the detector means (30) are mounted on an optical bench (50), and wherein the relative displacement between the optical path (2) and the measuring cell (40) is effected by a transverse displacement (5) of the optical bench (50) while the measuring cell (40) is stationary.

**6.** The device (1) according to any one of the preceding claims, comprising a device housing (60) and a measuring cell holder (49) for accommodating the measuring cell (40), wherein the measuring cell holder (49) is mounted in the device housing (60) at a fixed location and the device housing (60) has an opening (66) through which the measuring cell (40) can be inserted into the measuring cell holder (49) from outside and removed from the measuring cell holder (49) by a user without having to open the device housing (60).

**7.** The device (1) according to any one of the preceding claims, wherein the first Fourier lens (12) is disposed upstream of the first measuring cell position (13), for measuring using the convergent first light beam (11) and the measuring cell (40) in the first and/or second measuring cell positions (13, 23) with inverse Fourier optics.

**8.** The device (1) according to any one of the preceding claims, comprising

a second light source (20) for generating a second monochromatic light beam (11), in particular with a wavelength shorter than the wavelength of the first light beam (11); and
a second Fourier lens (22) for generating a further diffraction pattern of the sample material using the second light beam (11) when the measuring cell (40) is located at the second measuring cell position (23) downstream of the reflector means (3).

**9.** The device (1) according to claim 8, wherein the reflector means (3) comprises at least one semi-transparent mirror which reflects the first light beam (11) and transmits the second light beam (21) in order to inject the second light beam (21) into the optical path through the rear face (6b) of the semi-transparent mirror (6).

**10.** The device (1) according to claim 9, wherein the first and second light beams (11, 21) are incident on the semi-transparent mirror (6) from different sides (6a, 6b) at different polarization angles (s, p).

**11.** The device (1) according to any one of claims 8 to 10, wherein the second Fourier lens (22) for the second light beam (21) is arranged upstream of the second measuring cell position (23) for measuring using the convergent second light beam (21) with inverse Fourier optics when the measuring cell (40) is located at the second measuring cell position (23).

**12.** The device (1) according to claim 11, wherein the detector means (30) is arranged in the focal plane of the second Fourier lens (12) and no further lens is provided between the measuring cell (40) and the detector means (30) when the measuring cell (40) is in the second measuring cell position (23).

**13.** A method for determining the particle size distribution of sample material (44), **characterized by** being carried out using the device (1) according to any one of the preceding claims and by comprising the following steps:

a) introducing the dispersed sample material (44) into the measuring cell (40);
b) illuminating the sample material (44) with the first light beam (11) while the measuring cell (40) is located at the first measuring cell position (13) upstream of the reflector means (3), capturing and evaluating the intensity distribution of the diffraction pattern for calculating the particle size distribution in a first particle size range;
c) illuminating the sample material (44) with the first or second light beam (11, 21) while the measuring cell (40) is located at the second measuring cell position (23) downstream of the reflector means (3), capturing and evaluating the intensity distribution of the diffraction pattern for calculating the particle size distribution in a second particle size range, wherein the second particle size range is offset towards smaller particle sizes compared to the first particle size range;
d) between step b) and c), controlling the relative displacement (8) between the measuring cell (40) and the optical path in order to bring the measuring cell (40) from the first measuring cell position (13) to the second measuring cell position (23) or vice versa, depending on whether step b) or c) is performed first.

**14.** A device (1) for measuring the particle size distribution of sample material (44) using light diffraction, comprising:

a first light source (10) for generating a first monochromatic light beam (11), the first light beam (11) defining an optical path (2) of the device (1);
a first Fourier lens (12) for the first light beam (11);
a measuring cell (40) having a sample chamber (42) that is bounded on both sides thereof by windows (46, 48), for accommodating the sample material (44), wherein the sample material (44) in the sample chamber (42) can be irradiated with the first light beam (11) in order to produce a diffraction pattern of the sample material (44) when the measuring cell (40) is arranged in the beam path of the first light beam (11);

a detector means (30) in the optical path for measuring the diffraction pattern produced by the sample material (44) at angles in the forward direction;

an evaluation means (70) for determining the particle size distribution of the sample material (44) on the basis of said diffraction pattern;

wherein the length of the section of the optical path between the measuring cell (40) and the detector means (30) can be altered by a relative displacement (8) between the optical path (2) and the measuring cell (40) such that the measuring cell (40) can be arranged in the optical path (2) at least at first and second measuring cell positions (13, 23) in order to be able to accommodate different particle size ranges;

wherein the first light source (10), the first Fourier lens (12) and the detector means (30) are mounted on an optical bench (50);

**characterized in that**

the relative displacement (8) between the optical path (2) and the measuring cell (40) is effected by a displacement of the optical bench (50) while the measuring cell (40) is stationary;

a measuring cell holder (49) is provided for accommodating the measuring cell (40), wherein the measuring cell holder (49) is mounted in the device housing (60) at a fixed location; and

the device housing (60) has an opening (66) through which the measuring cell (40) can be inserted into the measuring cell holder (49) and removed from the measuring cell holder (49) by the user without having to open the device housing (60).

**Revendications**

1.	Appareil (1) de mesure de la distribution de la taille des particules d'un matériau échantillon (44), par diffraction de lumière, comprenant :

une première source de lumière (10) destinée à produire un premier faisceau lumineux (11) monochromatique, le premier faisceau lumineux (11) définissant un chemin optique (2) de l'appareil,

une première lentille de Fourier (12) pour le premier faisceau lumineux (11),

une cellule de mesure (40) avec une chambre d'échantillon (42) délimitée de part et d'autre par des fenêtres (46, 48) et destinée à recevoir le matériau échantillon (44), le matériau échantillon (44) pouvant être irradié avec le premier faisceau lumineux (11) dans la chambre d'échantillon (42), afin de générer un motif de diffraction du matériau échantillon (44) lorsque la cellule de mesure (40) est disposée sur le trajet des rayons du premier faisceau lumineux (11),

un dispositif détecteur (30) sur le chemin optique (2), destiné à détecter le motif de diffraction produit par le matériau échantillon (44), sous des angles dans la direction avant,

un dispositif d'évaluation (70) destiné à déterminer la distribution de la taille des particules du matériau échantillon (44), à l'aide du motif de diffraction,

sachant que la longueur de la portion du chemin optique (2) entre la cellule de mesure (40) et le dispositif détecteur (30) peut être modifiée par le biais d'un mouvement relatif (8) entre le chemin optique (2) et la cellule de mesure (40), de sorte que la cellule de mesure (40) peut être placée sur le chemin optique (2), au moins dans une première et une deuxième position de cellule de mesure (13, 23), afin de pouvoir couvrir des intervalles différents de taille des particules,

**caractérisé en ce que**

la direction de propagation du premier faisceau lumineux (11) est déviée au moyen d'un dispositif réflecteur (3), de manière à ce que le chemin optique (2) forme un angle,

sachant que la première position de cellule de mesure (13) se situe sur le chemin optique (2), en amont sur le faisceau par rapport au dispositif réflecteur (3), et la deuxième position de cellule de mesure (23) se situe sur le chemin optique (2), en aval sur le faisceau par rapport au dispositif réflecteur (3), et

sachant que le mouvement relatif (8) entre le chemin optique (2) et la cellule de mesure (40) s'effectue transversalement au chemin optique (2), à l'endroit de la première et de la deuxième position de cellule de mesure (13, 23).

2.	Appareil (1) selon la revendication 1, dans lequel la deuxième position de cellule de mesure (23) se situe à une petite distance avant le dispositif détecteur (40), afin de pouvoir mesurer de grands angles de diffraction.

3.	Appareil (1) selon une des revendications précédentes, dans lequel le chemin optique (2) comporte au moins une première portion (2a), en amont sur le faisceau par rapport au dispositif réflecteur (3), et une deuxième portion (2c), en aval sur le faisceau, par rapport au dispositif réflecteur (3), la première position de cellule de mesure (13) se situant sur la première portion (2a) et la deuxième position de cellule de mesure (23) se situant sur la deuxième portion (2c), et la direction de propagation du premier faisceau lumineux (11) sur la première et la deuxième portion (2a, 2c) étant sensiblement opposée.

4. Appareil (1) selon une des revendications précédentes, dans lequel le dispositif réflecteur (3) comprend un premier et un deuxième miroir (4, 6), de sorte que le chemin optique est plié sensiblement en forme de U, et

comprend une première portion (2a) entre la première source de lumière (10) et le premier miroir (4), une deuxième portion (2c) entre le deuxième miroir (6) et le dispositif détecteur (30), et

une troisième portion (2b) entre les premier et deuxième miroirs (4, 6), sachant que la direction de propagation du premier faisceau lumineux (11) sur les première et deuxième portions (2a, 2c) est sensiblement opposée et s'étend transversalement aux première et deuxième portions (2a, 2c), sur la troisième portion (2b), et

sachant que la première position de cellule de mesure (13) se situe sur la première portion (2a) et la deuxième position de cellule de mesure (23) se situe sur la deuxième portion (2c).

5. Appareil (1) selon une des revendications précédentes, dans lequel la première source de lumière (10), la première lentille de Fourier (12), le dispositif réflecteur (3) et le dispositif détecteur (30) sont montés sur un banc optique (50), et le mouvement relatif entre le chemin optique (2) et la cellule de mesure (40) s'effectue par le biais d'un déplacement transversal (5) du banc optique (50), lorsque la cellule de mesure (40) est fixe.

6. Appareil (1) selon une des revendications précédentes, comprenant un boîtier d'appareil (60) et un support de cellule de mesure (49) destiné à recevoir la cellule de mesure (40), le support de cellule de mesure (49) étant monté de manière fixe dans le boîtier d'appareil (60), et le boîtier d'appareil (60) présentant une ouverture (66) à travers laquelle la cellule de mesure (40) peut être placée de l'extérieur dans le support de cellule de mesure (49) par l'utilisateur et peut être retirée du support de cellule de mesure (49), sans qu'il soit nécessaire d'ouvrir le boîtier d'appareil (60).

7. Appareil (1) selon une des revendications précédentes, dans lequel la première lentille de Fourier (12) est disposée en amont sur le faisceau par rapport à la première position de cellule de mesure (13), afin de mesurer avec le premier faisceau lumineux (11) convergent et la cellule de mesure (40), dans la première et/ou la deuxième position de cellule de mesure (13, 23), avec un objectif inversé de Fourier.

8. Appareil (1) selon une des revendications précédentes, comprenant

une deuxième source de lumière (20) destinée à produire un deuxième faisceau lumineux (11) monochromatique, notamment avec une longueur d'onde qui est inférieure à la longueur d'onde du premier faisceau lumineux (11), et

une deuxième lentille de Fourier (22) pour générer un autre motif de mouvement du matériau échantillon avec le deuxième faisceau lumineux (11), lorsque la cellule de mesure (40) se trouve dans la deuxième position de cellule de mesure (23), an aval sur le faisceau par rapport au dispositif réflecteur (3).

9. Appareil (1) selon la revendication 8, dans lequel le dispositif réflecteur (3) comprend au moins un miroir semi-transparent qui réfléchit le premier faisceau lumineux (11) et laisse passer le deuxième faisceau lumineux (21), afin de coupler le deuxième faisceau lumineux (21) dans le chemin optique, à travers la face arrière (6b) du miroir semi-transparent (6).

10. Appareil (1) selon la revendication 9, dans lequel le premier et le deuxième faisceau lumineux (11, 21) arrivent sur le miroir semi-transparent (6) depuis des côtés différents (6a, 6b), avec des angles de polarisation différents (s, p).

11. Appareil (1) selon une des revendications 8 à 10, dans lequel la deuxième lentille de Fourier (22) pour le deuxième faisceau lumineux (21) est disposée en amont sur le faisceau par rapport à la deuxième position de cellule de mesure (23), pour mesurer avec le deuxième faisceau lumineux (21) convergent, avec un objectif inversé de Fourier, lorsque la cellule de mesure (40) se trouve dans la deuxième position de cellule de mesure (23).

12. Appareil (1) selon la revendication 11, dans lequel le dispositif détecteur (30) est placé dans le plan focal de la deuxième lentille de Fourier (12), et il n'est pas prévu d'autre lentille entre la cellule de mesure (40) et le dispositif détecteur (30), lorsque la cellule de mesure (40) se trouve dans la deuxième position de cellule de mesure (23).

13. Procédé de détermination de la distribution de la taille des particules d'un matériau échantillon (44), **caractérisé en ce qu'**il est mis en oeuvre avec l'appareil (1) selon une des revendications précédentes et comprend les étapes suivantes :

a) introduction du matériau échantillon (44) dispersé, dans la cellule de mesure (40),
b) éclairage du matériau échantillon (44) avec le premier faisceau lumineux (11), lorsque la cellule de mesure (40) se trouve dans la première position de cellule de mesure (13), en amont sur le faisceau par rapport au dispositif réflecteur (3), enregistrement et évaluation de la distribution de l'intensité du motif de diffraction, en vue du calcul de la distribution de la taille des particules dans un premier intervalle de taille de particules,

c) éclairage du matériau échantillon (44) avec le premier ou le deuxième faisceau lumineux (11, 21), lorsque la cellule de mesure (40) se trouve dans la deuxième position de cellule de mesure (23), en aval sur le faisceau par rapport au dispositif réflecteur (3), enregistrement et évaluation de la distribution de l'intensité du motif de diffraction, en vue du calcul de la distribution de la taille des particules dans un deuxième intervalle de taille des particules, le deuxième intervalle de taille des particules étant décalé vers des tailles de particules plus petites par rapport au premier intervalle de taille des particules,

d) entre les étapes b) et c), déclenchement du mouvement relatif (8) entre la cellule de mesure (40) et le chemin optique (2), pour amener la cellule de mesure (40) de la première position de cellule de mesure (13) dans la deuxième position de cellule de mesure (23) ou inversement, selon que l'on exécute d'abord l'étape b) ou c).

14. Appareil (1) de mesure de la distribution de la taille des particules d'un matériau échantillon (44), par diffraction de lumière, comprenant :

une première source de lumière (10) destinée à produire un premier faisceau lumineux (11) monochromatique, le premier faisceau lumineux (11) définissant un chemin optique (2) de l'appareil (1),

une première lentille de Fourier (12) pour le premier faisceau lumineux (11),

une cellule de mesure (40) avec une chambre d'échantillon (42) délimitée de part et d'autre par des fenêtres (46, 48) et destinée à recevoir le matériau échantillon (44), le matériau échantillon (44) pouvant être irradié avec le premier faisceau lumineux (11) dans la chambre d'échantillon (42), afin de générer un motif de diffraction du matériau échantillon (44), lorsque la cellule de mesure (40) est disposée sur le trajet des rayons du premier faisceau lumineux (11),

un dispositif détecteur (30) sur le chemin optique, destiné à mesurer le motif de diffraction produit par le matériau échantillon (44), sous des angles dans la direction avant,

un dispositif d'évaluation (70) destiné à déterminer la distribution de la taille des particules du matériau échantillon (44), à l'aide du motif de diffraction,

sachant que la longueur de la portion du chemin optique entre la cellule de mesure (40) et le dispositif détecteur (30) peut être modifiée par le biais d'un mouvement relatif (8) entre le chemin optique (2) et la cellule de mesure (40), de sorte que la cellule de mesure (40) peut être disposée sur le chemin optique (2), au moins dans une première et une deuxième position de cellule de mesure (13, 23), afin de pouvoir couvrir des intervalles différents de taille des particules,

sachant que la première source de lumière (10), la première lentille de Fourier (12) et le dispositif détecteur (30) sont montés sur un banc optique (50),

**caractérisé en ce que** le mouvement relatif entre le chemin optique (2) et la cellule de mesure (40) s'effectue par le biais d'un déplacement du banc optique (50), lorsque la cellule de mesure (40) est fixe,

un support de cellule de mesure (49) est prévu, qui est destiné à recevoir la cellule de mesure (40), ledit support de cellule de mesure (49) étant monté de manière fixe sur le boîtier d'appareil (60), et

le boîtier d'appareil (60) présente une ouverture (66) à travers laquelle la cellule de mesure (40) peut être placée dans le support de cellule de mesure (49) par l'utilisateur, et peut être retirée du support de cellule de mesure (49), sans qu'il soit nécessaire d'ouvrir le boîtier d'appareil (60).

Fig. 1

Fig. 2

EP 2 163 883 B1

Fig. 3

40b 40a 40 10 14 1

5 4

49

60

62

20 24 7 6 11 50 30 34

Fig. 4

40b 40a 40 14 1

5 4

49

60

62

20 24 54 7 6 56 21 50 30 34

19

Fig. 5

Laserstrahl "ROT"

Fig. 6

Laserstrahl "GRÜN"

Fig. 7

Fig. 8

## Fig. 9

10 off  40mm  BK7  Optics
> 99.5% R@ 1064 nm / 45 Deg  S-pol

## Fig. 10

Side 1 >99.5%Rs at 1064nm; >95%Tp at 532nm / 45°

☒ Transmission curve (T%)  
☐ Reflection curve (R%)

Wavelength range: 450-1250nm  
Angle of incidence: 45°

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0207176 A
- US 4755052 A
- DE 10218413 A1
- GB 2340936 A
- DE 10218415